# EUROPEAN PATENT SPECIFICATION

(11) **EP 0 741 513 B1**
(45) Date of publication and mention of the grant of the patent: **14.03.2001**
(21) Application number: 95937223.6
(22) Date of filing: 28.11.1995
(51) Int. Cl.: A01J 7/02, A01J 5/017

(54) **AN IMPLEMENT FOR MILKING ANIMALS**
VORRICHTUNG ZUM MELKEN VON TIEREN
INSTALLATION DE TRAITE D'ANIMAUX

(30) Priority: 30.11.1994 NL 9402010
(43) Date of publication of application: 13.11.1996
(60) Divisional application: 00116831.9
(73) Proprietor: MAASLAND N.V., 3155 PD Maasland (NL)
(72) Inventor: VAN DER LELY, Cornelis, CH-6300 Zug (CH)
(74) Representative: Corten, Maurice Jean F.M.
(86) International application number: PCT/NL95/00405
(87) International publication number: WO 96/16536

(56) References cited:
- EP-A- 0 476 771
- EP-A- 0 510 779
- EP-A- 0 592 043

## Description

The present invention relates to an implement for milking animals, such as cows, comprising at least one milking robot for automatically connecting teat cups to the teats of an animal, and at least one milking machine for automatically milking the animals.

An implement of this kind is known from EP-A-0 476 771, this implement has the disadvantage that, when during milking one of the teat cups falls from a teat, e.g. because it is kicked off by the animal, contaminations may enter the milking system of the milking machine via the openings of the teat cups. The milking system comprises here all those milking machine parts that come into contact with milk. Besides the milking system, a milking machine includes a vacuum system, as well as cleaning means for the milking system, often in the form of a rinsing fluid line system as e.g. described in EP-A-0 510 779, in which at least part of the milking system can be incorporated. An other form of contamination of the milking system occurs when between the milkings of subsequent animals there lies a considerable space in time. During these intervals, residues of milk may deposit against the walls of the milk lines or elsewhere in the system. Again an other form of contamination of the milking system may occur when the teat cups are connected to teats that have been insufficiently cleaned. Although these problems could be restricted by a frequent cleaning of the milking system, this is certainly not an optimal solution in view of the fact that, when many animals have to be milked in succession, the milking process has to be interrupted relatively often and relatively large quantities of cleaning fluid have to be used.

According to the invention, an advantageous solution to this problem is obtained when the implement is provided with sensors for the detection of contaminations in the milking system of the milking machine. The contaminations ascertained by the sensors can be recorded in a computer. On the basis of the information supplied by the sensors, a degree of contamination can be defined by means of the computer. The cleaning of the milking system can then be effected on the basis of the degree of contamination. In other words, the milking system is only cleaned when sensors have ascertained that a certain degree of contamination has occurred.

In order to obtain a proper image as to the extent to which the system has been contaminated and to establish the degree in which the contamination is to be attributed to the individual animals, according to a further aspect of the invention, the implement is furthermore characterized in that the degree of contamination of the milking system is defined after the individual animals have been milked.

According to an other aspect of the invention, the cleaning of the milking system is effected when, after an animal has been milked, a fixed period of time has elapsed without a next animal having presented itself to be milked, unless the degree of contamination is such that the milking system has to be cleaned immediately after an animal has been milked. In other words, when, on the basis of the degree of contamination ascertained, cleaning of the milking system is considered to be desirable, this cleaning will preferably be effected in periods of time, during which the milking implement is used less intensively. However, when the degree of contamination is such that the milking system has to be cleaned immediately, such periods of time will not be waited for. Even though hardly any contamination of the milking system occurs, it could yet be desirable to clean the milking system after some time. Therefore, according to a further aspect of the invention, it is possible, after a fixed period of time has elapsed since the previous cleaning of the milking system, to clean the milking system again, even though the degree of contamination in which cleaning would be effected otherwise has not yet been reached.

The sensor or sensors for the detection of contaminations in the milking system can be adapted to be provided in one or more teat cups and/or in a milk meter, such as a milk glass, and/or in one or more parts of the line leading from the teat cups to a milk tank, e.g. near a milk pump incorporated in the line between the milk meter and the milk tank. The sensors to be used for the detection of contaminations in the milking system can be adapted to be incorporated in a radioscopic or an ultrasonographic sensor measuring system. On the other hand, it is also possible to detect contaminations in the milking system by means of a combination of a filter and pressure means incorporated in a milk line for defining the pressure ratio over this filter, an accumulation of dirt in the filter being capable of changing the pressure ratio over the filter in the milk line.

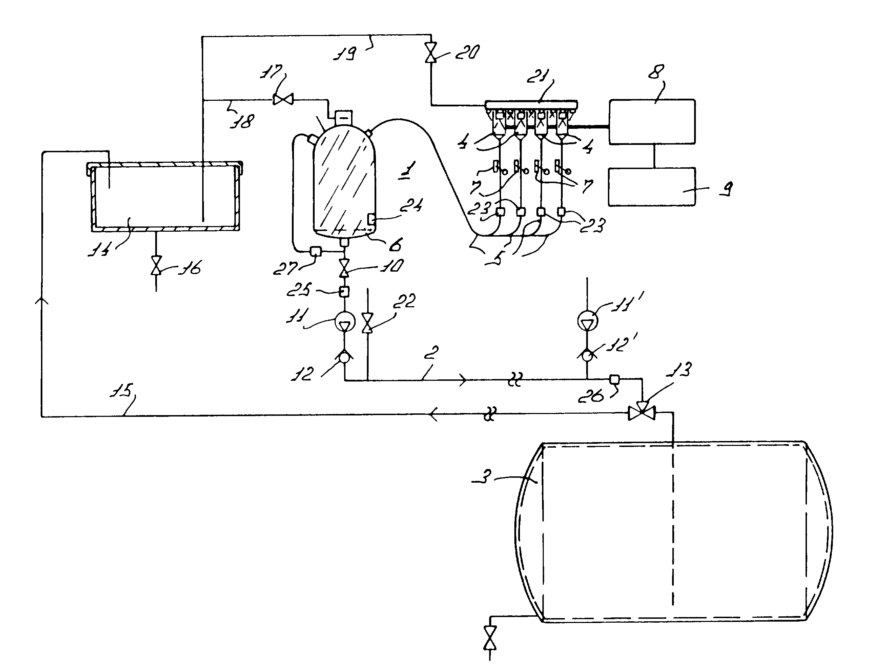

For a better understanding of the invention and to show how the same may be carried into effect, reference will now be made, by way of example, to the accompanying drawing, in which the milking implement is shown schematically.

A milking machine 1 which is connected to a supply line 2 leading to a milk tank 3. The milking machine 1 comprises four teat cups 4 that are to be connected to the teats of an animal to be milked, of which teat cups 4 the milk lines 5 are guided to a milk meter 6 constituted by a milk glass. The milk lines 5 are provided with valves 7, each of which is used for squeezing a milk line or for closing it off otherwise as soon as the vacuum in a corresponding teat cup has dropped. The teat cups 4 are capable of being connected to the teats of an animal, respectively of being disconnected therefrom, by means of a robot 8 which, in this case, is provided with a robot arm that serves as a carrier for the teat cups 4, the milking robot 8 being controlled from a computer 9. The quantity of milk obtained during each milking run is determined in the milk glass 6. For that purpose there is used a sensor 27 which defines the difference between the underpressure in the upper part of the milk glass 6 and the pressure of the milk column in the milk glass 6 and passes it on to the computer 9. The milk obtained is supplied from the milk glass 6 to the supply line 2. For that purpose the discharge opening of the milk glass 6 is connected via a cock 10 to a pump 11. By means of the pump 11, the milk is pumped via the non-return valve 12 into the supply line 2, to which, of course, further milk apparatuses may be connected; the drawing shows the pump 11' and the non-return valve 12', via which units there can be supplied milk from the milk glass of a second milking apparatus to the supply line 2. Apart from the milking robot 8 in the separate milking apparatuses, the latter constitute, together with the milk tank 3, the milking machine.

At the end of the supply line 2, near the milk tank 3, there is provided a three-way cock 13, to which a rinsing fluid discharge line 15 is connected that is lead back to a rinsing fluid reservoir 14, which may be connected to the sewer via a cock 16. When the cock 13 has been brought in a first position, the milk yielded can be guided, with the aid of the milking machine 1, to the milk tank 3, while, when the cock 13 has been brought in a second position, there is realized a rinsing fluid ring line system. This system comprises the rinsing fluid reservoir 14, a line 18 provided with a cock 17 and extending from there to the milk glass 6, the milk glass 6 itself, the cock 10 connected to the discharge opening of the milk glass 6, the pump 11, the non-return valve 12, the supply line 2, the three-way cock 13 and the rinsing fluid discharge line 15. With the aid of the pump 11, rinsing fluid can be sucked in from the rinsing fluid reservoir 14 and be pumped round through the said ring line system. In this manner, part of the milking apparatus, i.e. the milk glass 6 and the units connected thereto, as well as the supply line 2, is cleaned. However, for the purpose of cleaning the teat cups 4 as well, there is provided a by-pass which extends from the rinsing fluid reservoir 14, via a line 19 in which a cock 20 is incorporated, to a cassette 21 provided with nozzles for cleaning the inside of the teat cups 4, and from there, via the teat cups 4 which, after milking, are connected to the cassette 21, and the milk lines 5, to the milk glass 6. The rinsing fluid sucked in by the pump 11 is not only guided via the cock 17 immediately through the milk glass 6, but also via the cock 20, the cassette 21, the teat cups 4 and the milk lines 5 to the milk glass 6. Consequently, by means of the pump 11, it is possible to clean each milking apparatus separately, together with the supply line 2. In the supply line 2, near the point where the milking apparatus 1 situated furthest from the milk tank 3 is connected thereto, there is provided an air-supply valve 22. By means of this valve 22, it is possible to blow air through almost the entire supply line 2 so as to make it milk-free after milking and to make it rinsing fluid-free after cleaning. Furthermore, the milk tank 3 can be cleaned independently of the milking apparatus 1 and the supply line 2. The cleaning system for the milk tank 3 is not shown in the drawing.

The decision as to when the milking system, i.e. those parts of the milking apparatus that come into contact with the milk, has to be cleaned can be made on the basis of time; the computer is adapted to decide, each time after a fixed number of hours has elapsed, whether or not the milking process has to be interrupted and the milking system has to be cleaned. This command can also be given each time when the milk tank is emptied or will be emptied, because then the milking machine is mostly out of use. The milking system can also be cleaned each time after a fixed number of animals has been milked. However, a more adequate procedure is obtained when the cleaning is effected each time when a certain degree of contamination has been reached. For this purpose, the milking system comprises sensors. The embodiment shown in the drawing is provided with sensors 23 in the milk lines 5 between the separate teat cups 4 and the milk glass 6, with a sensor 24 in the milk glass 6 itself, with a sensor 25 in the line between the milk glass 6 and the pump 11, and with a sensor 26 in the line 2 between the pump 11 and the milk tank 3, near the cock 13. However, it will be obvious that the said sensors can also be incorporated in the teat cups 4 themselves or at other places in the milk lines 5 and 2 than indicated in the drawing. The sensors 23 - 26 are in connection with the computer 9, so that by means of this computer there can be recorded when a sensor has ascertained a contamination in the milking system. On the basis of the information supplied by the sensors 23 - 26, the computer 9 can define a degree of contamination, so that it can decide whether or not the milking system has to be cleaned. The application of the above-mentioned sensors also enables to ascertain the degree of contamination of the milking system each time after the separate animals have been milked. When the teats of an animal, prior to being milked, are cleaned insufficiently, a marked increase in the degree of contamination can be recorded in the computer 9. Therefore, by a continuous recording of the degree of contamination of the milking system there is also obtained information as to the quality of operating of the cleaning means for the teats of the animal or as to the degree of contamination of the animal's teats themselves. The degree of contamination, on the basis of which there is decided to proceed to the cleaning of the milking system, can be combined with other criteria, such as a fixed period of time that has elapsed. For example, besides the criterion of the degree of contamination, it is possible to decide that the milking system has to be cleaned when a fixed period of time has elapsed since the previous cleaning, even though the degree of contamination that would otherwise have been decisive for the cleaning is not yet obtained. It is possible to incorporate the sensors 23 - 26 adapted to be used for ascertaining contaminations in the milking system in a radioscopic or an ultrasonographic sensor measuring system. In particular the use of X-rays or ultrasonic rays enables an efficient detection of particles, certainly those having a certain size. Additionally, there can be used a sensor in the form of a combination of a filter and pressure measuring means incorporated in a milk line for defining the pressure ratio over this filter. However, it will be obvious that the invention is not restricted to the above-mentioned sensors, but extends to any possible type of sensors, with the aid of which contaminations in the milking system can be ascertained.

The implement described here is adapted to constitute part of a fully automated milking and cleaning system, wherein use is made of a system for automatically admitting animals, if required selectively, to the milking place, an animal identification system, a system for cleaning the teats, a robot (the robot 8) for automatically connecting teat cups and disconnecting same, an automatic milking process with incorporated means for controlling the quality of the milk and the course of the process, an automatic feeding system, etc., the entire system being controlled by a computer (the computer 9).

The invention is not restricted to the embodiment described and shown here, but it includes all sorts of modifications, of course, falling within the scope of the following claims.

## Claims

1. An implement for milking animals, such as cows, comprising at least one milking robot (8) for automatically connecting teat cups (4) to the teats of an animal, and at least one milking machine (1) for automatically milking the animals, characterized in that the implement is provided with sensors (23 - 26) for the detection of contaminations in the milking system of the milking machine (1).

2. An implement as claimed in claim 1, characterized in that there is provided a computer (9) for the recording of contaminations in the milking system that have been ascertained by sensors (23 - 26).

3. An implement as claimed in claim 2, characterized in that, on the basis of the information supplied by the sensors (23 - 26) there is defined a degree of contamination in the computer (9).

4. An implement as claimed in claim 3, characterized in that there are provided cleaning means for the milking system, and in that the cleaning of the milking system is effected on the basis of the degree of contamination.

5. An implement as claimed in claim 3 or 4, characterized in that the degree of contamination of the milking system is defined after an animal has been milked.

6. An implement as claimed in claim 4, characterized in that the cleaning of the milking system is effected when, after an animal has been milked, a fixed period of time has elapsed without a next animal having presented itself to be milked, unless the degree of contamination is such that the milking system has to be cleaned immediately after an animal has been milked.

7. An implement as claimed in claim 6, characterized in that, after a fixed period of time has elapsed since the previous cleaning of the milking system, the milking system is cleaned again, even though the degree of contamination in which cleaning would be effected otherwise has not yet been reached.

8. An implement as claimed in any one of the preceding claims, characterized in that a sensor (23 - 26) for the detection of contaminations in the milking system can be provided in one or more teat cups (4) and/or in a milk meter (6), such as a milk glass, and/or in one or more parts of the line (2, 5) from the teat cups (4) to a milk tank (3), e.g. near a milk pump (11) incorporated in the line (2) between the milk meter (6) and the milk tank (3).

9. An implement as claimed in any one of the preceding claims, characterized in that contaminations in the milking system can be detected by means of a radioscopic or an ultrasonographic sensor measuring system.

10. An implement as claimed in any one of the preceding claims, characterized in that contaminations in the milking system can be detected by means of a combination of a filter and pressure means incorporated in a milk line for defining the pressure ratio over this filter.

## Patentansprüche

1. Vorrichtung zum Melken von Tieren, wie z. B. Kühen, mit mindestens einem Melkroboter (8) zum automatischen Anschließen von Zitzenbechern (4) an die Zitzen eines Tieres und mindestens einer Melkmaschine (1) zum automatischen Melken der Tiere,
dadurch gekennzeichnet, daß die Vorrichtung Sensoren (23 bis 26) zur Ermittlung von Verschmutzungen im Melksystem der Melkmaschine (1) aufweist.

2. Vorrichtung nach Anspruch 1,
dadurch gekennzeichnet, daß ein Computer (9) vorhanden ist, um Verschmutzungen im Melksystem aufzuzeichnen, die von Sensoren (23 bis 26) ermittelt worden sind.

3. Vorrichtung nach Anspruch 2,
dadurch gekennzeichnet, daß auf der Basis der von den Sensoren (23 bis 26) gelieferten Information in dem Computer (9) ein Verschmutzungsgrad definiert wird.

4. Vorrichtung nach Anspruch 3,
dadurch gekennzeichnet, daß eine Reinigungsvorrichtung für das Melksystem vorhanden ist, und daß das Reinigen des Melksystems auf der Basis des Verschmutzungsgrades erfolgt.

5. Vorrichtung nach Anspruch 3 oder 4,
dadurch gekennzeichnet, daß der Verschmutzungsgrad des Melksystems nach dem Melken eines Tieres definiert wird.

6. Vorrichtung nach Anspruch 4,
dadurch gekennzeichnet, daß das Reinigen des Melksystems erfolgt, wenn nach dem Melken eines Tieres ein festgelegter Zeitraum verstrichen ist, ohne daß sich ein weiteres Tier zum Melken eingefunden hat, es sei denn, daß der Verschmutzungsgrad so hoch ist, daß das Melksystem unmittelbar nach dem Melken eines Tieres gereinigt werden muß.

7. Vorrichtung nach Anspruch 6,
dadurch gekennzeichnet, daß das Melksystem nach Ablauf eines festgelegten Zeitraumes seit dem letzten Reinigen des Melksystems erneut gereinigt wird, obwohl der Verschmutzungsgrad, bei dem sonst eine Reinigung erfolgen würde, noch nicht erreicht ist.

8. Vorrichtung nach einem der vorhergehenden Ansprüche,
dadurch gekennzeichnet, daß ein Sensor (23 bis 26) zur Ermittlung von Verschmutzungen im Melksystem in einem oder mehreren Zitzenbechern (4) angeordnet sein kann und/oder in einem Milchmengenmesser (6), wie z. B. einem Milchauffangglas, und/oder in einem oder mehreren Teilen der Leitung (2, 5) von den Zitzenbechern (4) zu einem Milchtank (3), beispielsweise nahe einer Milchpumpe (11), die in der Leitung (2) zwischen dem Milchmengenmesser (6) und dem Milchtank (3) angeordnet ist.

9. Vorrichtung nach einem der vorhergehenden Ansprüche,
dadurch gekennzeichnet, daß Verschmutzungen im Melksystem mit Hilfe eines Meßsystems mit Röntgen- oder Ultraschall-Sensor feststellbar sind.

10. Vorrichtung nach einem der vorhergehenden Ansprüche,
dadurch gekennzeichnet, daß Verschmutzungen im Melksystem mit Hilfe einer kombinierten Filter- und Druckvorrichtung feststellbar sind, die in einer Milchleitung angeordnet ist, um das Druckverhältnis über diesem Filter zu ermitteln.

## Revendications

1. Installation de traite d'animaux, tels que des vaches, comportant au moins un robot de traite (8) pour connecter automatiquement des gobelets trayeurs (4) aux trayons d'un animal, et au moins une machine de traite (1) pour traire automatiquement les animaux, caractérisée en ce que l'installation est munie de capteurs (23 à 26) destinés à détecter des contaminations dans le système de traite de la machine de traite (1).

2. Installation selon la revendication 1, caractérisée en ce qu'il est fourni un ordinateur (9) pour l'enregistrement de contaminations dans le système de traite qui ont été constatées par les capteurs (23 à 26).

3. Installation selon la revendication 2, caractérisée en ce que, sur la base des informations envoyées par les capteurs (23 à 26), on définit un degré de contamination dans l'ordinateur (9).

4. Installation selon la revendication 3, caractérisée en ce que des moyens de nettoyage sont agencés dans le système de traite, et en ce que le nettoyage du système de traite est effectué sur la base du degré de contamination.

5. Installation selon la revendication 3 ou 4, caractérisée en ce que le degré de contamination du système de traite est défini après qu'un animal ait été trait.

6. Installation selon la revendication 4, caractérisée en ce que le nettoyage du système de traite est effectué lorsque, après qu'un animal ait été trait, une période fixée s'est écoulée sans qu'un animal suivant se soit présenté lui-même pour être trait, à moins que le degré de contamination soit tel que le système de traite doive être nettoyé immédiatement après qu'un animal ait été trait.

7. Installation selon la revendication 6, caractérisée en ce que, après qu'une période fixée se soit écoulée depuis le nettoyage précédent du système de traite, le système de traite est nettoyé à nouveau, bien que le degré de contamination à partir duquel le nettoyage serait autrement effectué n'ait pas encore été atteint.

8. Installation selon l'une quelconque des revendications précédentes, caractérisée en ce qu'un capteur (23 à 26) destiné à la détection de contaminations dans le système de traite peut être agencé sur un ou plusieurs gobelets trayeurs (4) et/ou dans un compteur à lait (6), tel qu'un verre à lait, et/ou dans une ou plusieurs parties de la ligne (2, 5) allant des gobelets trayeurs (4) jusqu'à un réservoir à lait (3), par exemple à proximité d'une pompe à lait (11) incorporée dans la ligne (2) entre le compteur à lait (6) et le réservoir à lait (3).

9. Installation selon l'une quelconque des revendications précédentes, caractérisée en ce que des contaminations dans le système de traite peuvent être détectées par l'intermédiaire d'un système de mesure à capteur radioscopique ou ultrasonographique.

10. Installation selon l'une quelconque des revendications précédentes, caractérisée en ce que des contaminations dans le système de traite peuvent être détectées par l'intermédiaire d'une combinaison de moyens formant filtre et de moyens de pression, incorporés dans une ligne de lait, destinés à définir le taux de pression sur ce filtre.
